(19) **Europäisches Patentamt European Patent Office Office européen des brevets**

(11) **EP 2 445 074 B1**

(12) **EUROPEAN PATENT SPECIFICATION**

(45) Date of publication and mention of the grant of the patent:
**29.03.2017 Bulletin 2017/13**

(51) Int Cl.:
***H02H 3/33*** *(2006.01)*

(21) Application number: **11183434.7**

(22) Date of filing: **30.09.2011**

(54) **A fault detecting device for electrical installations and equipment**

Fehlererkennungsvorrichtung für elektrische Einrichtungen und Ausrüstungen

Dispositif de détection de défaillances pour installation et équipements électriques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2010 IE 20100681**

(43) Date of publication of application:
**25.04.2012 Bulletin 2012/17**

(73) Proprietor: **Shakira Limited Ballinasloe, County Galway (IE)**

(72) Inventors:
• **O'Brien, Donal Ballinasloe County Galway (IE)**
• **Ward, Patrick Ballinasloe County Galway (IE)**
• **Daniels, Brien Ballinasloe County Galway (IE)**

(74) Representative: **Boyce, Conor et al Hanna Moore + Curley Garryard House 25/26 Earlsfort Terrace Dublin 2, D02 PX51 (IE)**

(56) References cited:
**EP-A1- 0 575 639       AT-B- 403 534
DE-A1- 3 807 934     US-B1- 6 198 611**

## Description

This invention relates to a fault detecting device for use in electrical installations and on equipment and is applicable inter alia to (i) residual current devices (RCDs) and (ii) arc fault detectors (AFDs).

(i) Residual Current Devices

RCDs can be divided into two broad categories, voltage dependent (VD) and voltage independent (VI). These are sometimes referred to as electronic and electromechanical types respectively. Voltage dependent RCDs use energy from the mains supply to carry out the functions of detection of a residual current and tripping of the RCD. Voltage independent RCDs use energy derived from the residual current alone to carry out the functions of detection and tripping. For more detailed information on RCD technology, see the article "Demystifying RCDs" at www.westernautomation.com.

IEC61008 is the international standard for voltage dependent and voltage independent RCDs. These RCDs do not have overcurrent detection capability and are therefore referred to as RCCBs.

IEC61009 is the international standard for voltage dependent and voltage independent RCDs. These RCDs do have overcurrent detection capability and are therefore referred to as RCBOs.

RCDs based on IEC61008 or IEC61009 are only required to operate at the frequency of the mains supply to which they are connected.

IEC62423 is the international standard for F Type and B Type RCDs. In addition to detection of residual currents at the mains supply frequency as for IEC61008 and IEC61009 based devices, both types can provide protection against residual currents over the range 10Hz to 1000Hz, and B Types can also detect pure DC residual currents.

These products and standards provide a hierarchy for RCDs as follows.

AC Types which can only detect AC residual currents at 50/60Hz mains supply frequency. The limit for shock protection for AC currents at normal mains supply frequency is 30mA according to IEC61008 or IEC61009.

A Types, which can detect AC and pulsating DC residual currents at 50/60Hz mains supply frequency. The limit for shock protection for pulsating DC currents at normal mains supply frequency is 42mA according to IEC61008 or IEC61009.

F Types, which can detect composite AC residual currents over the range 10Hz to 1000Hz, pulsating DC residual currents at mains supply frequency and AC residual currents at mains supply frequency.

B Types, which can detect pure DC residual currents, AC residual currents over the range 10Hz to 1000Hz, composite AC residual currents over the range 10Hz to 1000Hz, pulsating DC residual currents at mains supply frequency and AC residual currents at mains supply frequency. The limit for shock protection for AC currents at 1000Hz is 420mA.

The values of 30mA at 50Hz and 420mA at 1000Hz are deemed by IEC to be the limits of safety with regard to current flow through the human body (also known as safe touch current) and thus define the limits for operation of RCDs in providing shock protection.

The residual current value limits given for shock protection for A Types and B Types above correspond to the threshold of ventricular fibrillation at the stated frequencies in accordance with IEC 60479, and in effect define the limits of safe touch current for the operation of RCDs intended to provide shock protection.

For RCDs to be tested to and verified for compliance with IEC62423, they must first be tested to either IEC61008 or IEC61009 as a voltage dependent or a voltage independent RCCB or RCBO, and only after being verified as complying with one of those standards can the RCD be subsequently tested to and verified as complying with IEC62423.

Although RCDs based on VD and VI technologies are used throughout the world, some countries in mainland Europe restrict the use of voltage dependent RCDs in their markets. The reason given for this restriction is that a VD RCD may not be able to operate when supplied from a single phase. However, whilst the functions of detection and tripping can be achieved for AC (AC Type) and pulsating DC residual currents (A Type) with an RCD based on VI RCD technology when supplied from just one phase, it has not been possible to date to use this means to detect AC residual currents covering a spectrum of frequencies over the range 10Hz to 1000Hz. This has given rise to two types of RCDs as follows;

(i) 100% VD type RCDs which use electronic RCD technology for all functions.

(ii) Hybrid type RCDs which use VI RCD technology for the detection of AC and pulsating DC residual currents (AC and A Type functions) at mains supply frequency and which use VD RCD technology for detection of AC residual currents over the range 10Hz to 1000Hz, composite AC residual currents over the range 10Hz to 1000Hz and DC residual currents. These devices are referred to as "Hybrids" because they are partly VI and partly VD in their operation.

The advantage of the hybrid RCD is that it can be used in all countries, including those that restrict the use of VD RCDs and therefore provides access to those markets. However, a disadvantage of the hybrid is that it relies on VD technology for detection of AC residual currents over the frequency range 10Hz to 1000Hz, which leaves it prone to non functioning in the event of being supplied from a single phase or supply connection.

It would be a significant advantageous if this problem could be mitigated.

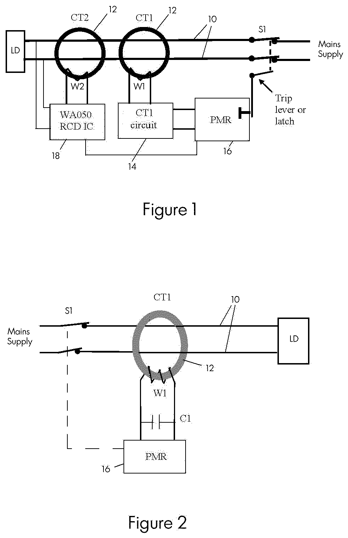

Figure 1 shows a typical hybrid RCD based on the prior art.

In the arrangement of Figure 1, a pair of electrical conductors 10 connect an AC mains supply to a load LD via a pair of normally closed switch contacts S1. The conductors 10 pass through the toroidal cores 12 of a pair of current transformers CT1 and CT2. The cores 12 are made of a ferromagnetic material such as nickel iron, amorphous cobalt or nanocrystaline material. The conductors 10 form a primary winding for each of the current transformers (the term "winding" is used in accordance with conventional terminology, even though the conductors pass directly through the cores 12 rather than being wound on them). Each current transformer has a respective secondary winding W1, W2 wound on the respective core. As is well known, in the case of a residual current in the supply conductors 10, i.e. a non-zero vector sum of currents flowing in the conductors 10, a current will be induced into each secondary winding in proportion to the magnitude of the residual current.

The current transformer CT1 together with its circuit 14 and a permanent magnet relay (PMR) 16 form a voltage independent (VI) RCD which can detect AC and pulsating DC residual currents at the mains supply frequency. The PMR 16 typically comprises a ferromagnetic yoke and armature, a permanent magnet and a low impedance coil. The armature is held in a closed position by the holding force of the permanent magnet which is opposed by the slightly weaker opening force of a spring. When a current of sufficient magnitude and polarity is passed through the coil the magnetic holding force is weakened so as to release the armature and cause automatic activation of the PMR and automatic opening of the contacts S1 to disconnect the load LD. The energy used to perform these functions is derived exclusively from the residual current detected by CT1. A typical trip level for this kind of RCD circuit is about 25ma to 30mA at mains supply frequency when used for shock protection.

The current transformer CT2 and its circuit 18 form a voltage dependent (VD) RCD which is provided with power from the mains supply to enable it to perform its functions. The circuit 18 may contain a WA050 RCD IC which is an industry standard RCD IC supplied by Western Automation Research & Development Ltd. When a residual current in excess of a certain magnitude flows in the primary conductors 10 the WA050 produces an output which activates the PMR so as to cause the contacts S1 to open. The circuit 18 detects residual currents over the AC range up to 1000Hz and completes the F Type capability of the RCD. In accordance with IEC 62423, for a 30mA rated RCD, the trip current limit at 1000Hz is 420mA, although the WA050-based circuit will have a trip level substantially below this limit.

The voltage independent RCD comprising the current transformer CT1 and its associated circuit 14 is shown in more detail in Figure 2. The circuit 14 comprises, in the simplest case, a capacitor C1 connected across the winding W1. When a residual current flows in the primary circuit (i.e. the conductors 10) it will induce a corresponding current into the secondary circuit which will flow in the PMR coil. In effect the PMR 16 acts as a low impedance load on the current transformer CT1. In addition to detecting residual currents, a key requirement of the VI RCD arrangement is to extract sufficient energy at the rated residual operating current of the device at rated frequency so as to operate the PMR. To achieve this second objective, the CT1 core 12, the winding W1 and the capacitor C1 are arranged as a tuned circuit with a resonant frequency Fo which is at or near the mains supply frequency and is derived from the formula:

$$Fo = 1/(2\pi\sqrt{LC})$$

Due to its reactive characteristics, the PMR 16 may impact on the resultant value of Fo. For a nominal 60Hz mains supply, Fo will be made as close to 60Hz as possible, and this will ensure maximum energy transfer from the primary to the secondary circuit for residual currents at the chosen resonant frequency, in this case the mains supply frequency.

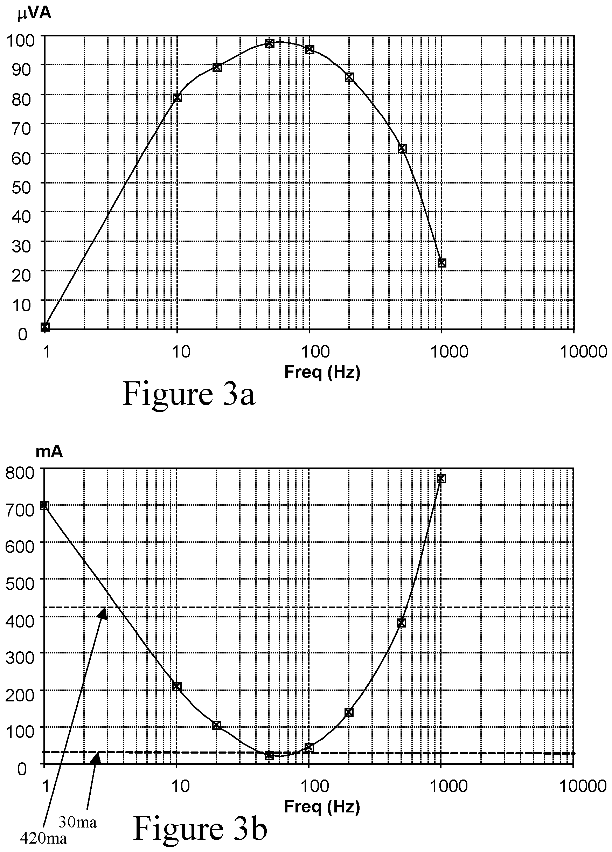

Figure 3a shows the power transfer in $\mu$VA (micro volts amps) from the current transformer CT1 to the PMR 16 for a constant 30mA residual current level over the frequency range 1Hz to 1000Hz.

It can be seen that the overall circuit behaves like a tuned circuit with its resonant frequency at about 60Hz and that peak output occurs at this frequency and falls off rapidly on either side of this point. In effect, the CT acts like a current source which is tuned to produce maximum output to the PMR at the chosen frequency of 60Hz. The term Q is used to quantify the shape of the graph shown in Figure 3a in that a peaky graph will have a high Q whereas a flatter graph will have a lower Q. The Q value is largely determined by the ratio of the inductance and capacitance within the tuned circuit.

There is a corresponding relationship between the tuned circuit response of Figure 3a and the residual current required to operate the PMR, which is about 90 $\mu$VA. This relationship is shown in Figure 3b.

It can be seen that within the range 50 - 80Hz, the trip level of the RCD is at or below 30mA, but at frequencies outside this range the trip level is much higher, e.g. at 1000Hz the trip level is about 800mA, which is well outside the IEC limits. To achieve operation at <420mA at 1000Hz the CT1 and C1 component values would need to be changed so as to move the resonant frequency to a level sufficiently high to ensure tripping within these two limits of residual current and frequency. In effect, the curve would have to be moved to the right. However, this would result in the trip level at 50/60Hz increasing substantially above the 30mA level, which would be counterproductive. It follows therefore that the simple tuned circuit arrangement of Figure 2 can only be optimised to produce adequate energy within a very limited frequency band and cannot do this over a wide frequency range, e.g. 10Hz to 1000Hz, thus making the circuit arrangement of Figure 2 unsuitable for operation over such a range. This problem is normally resolved by adding a second stage voltage dependent RCD circuitry as shown in Figure 1 which can detect residual currents at one or more frequencies above or below the mains supply frequency in addition to the mains supply frequency. However, this involves the use of an additional RCD section which adds considerably to complexity and cost, but also introduces a voltage dependent function into what might otherwise be a voltage independent RCD.

There are two specific sets of requirements and tests in IEC62423 regarding immunity to nuisance tripping for general type RCDs which do not exist in IEC61008 or IEC61009. In each case the RCD is required not to trip under the following test conditions:

(i) when a surge current of 3000A current pulse of type 8/20µS is applied (see subclause 9.1.5 of IEC62423)
(ii) when a single sinusoidal half wave current equal to 10 times the rated residual operating current of the device is applied (see subclause 9.1.6 of IEC62423). For a 30mA RCD, this translates into a requirement that the RCD must not trip when a residual current of 300mA flows in the main circuit for a period of 10 mSeconds for a 50Hz device.

These tests are referred to as surge current immunity tests, and both tests are particularly onerous for VI RCDs because the simple circuit arrangement of Figure 2 offers no immunity to such currents and the RCD will trip almost immediately on application of the test current in each case. This problem can be overcome by interfacing buffering or snubbing circuitry between the CT and the PMR, which desensitises the RCD such that without change to the CT or the PMR, the normal trip level of the circuit would exceed the specified limit of 30mA. Thus, special arrangements have to be made to the VI RCD to provide it with such immunity whilst ensuring proper operation at its rated trip current level.

It would be desirable to provide a voltage independent residual current device to operate within the IEC specified safety limits for shock protection as stated above and which provides immunity to nuisance tripping when subjected to the surge current immunity tests of IEC62423.

(ii) Arc Fault Detectors

Irish patent application number S2010/0534 describes an arc fault detector (AFD) which harnesses the energy of the arc fault current to facilitate its detection. The energy harnessed from a current transformer (CT) is fed to an electronic circuit which processes the energy to determine its magnitude and duration and to initiate removal of power from the protected circuit when the arc fault current exceeds certain thresholds of magnitude and duration. The processing stage of the AFD comprises an active electronic circuit which requires a supply voltage to enable it to function; the arc fault detector is therefore a voltage dependent device which needs a voltage from the mains supply or an auxiliary source to enable it to operate.

US6198611 discloses an arc fault detecting device for an AC supply including a current transformer having a primary winding comprising at least one supply conductor connecting an AC supply to a load, a secondary winding into which a current is induced in response to a fault current in the primary winding, and an electrical circuit connecting the secondary winding to an electromechanical actuator, wherein the electrical circuit includes at least a first capacitor which is progressively charged by components of the induced current of at least one polarity the electromechanical actuator being operably associated with the first capacitor to disconnect the load en the voltage on the first capacitor reaches a predetermined level. Another examples of residual current devices are disclosed in AT403534, DE3807934 and EP0575639.

It would be desirable to provide an arc fault detector whose operation is dependent only on the arc fault current and does not require a supply voltage for its operation. It is an object of the present invention to provide a fault detecting device for use on electrical installations and equipment which embodiments can be designed (i) as a voltage independent residual current device, preferably to operate within the IEC specified safety limits for shock protection as stated above and which provides immunity to nuisance tripping when subjected to the surge current immunity tests of IEC62423 or (ii) as a voltage independent arc fault detector.

According to the present invention there is provided a fault detecting device for an AC supply according to claim 1.

In the present context an electromechanical actuator is an electrical switch with mechanical contacts which are operated by a magnetic field produced by current flowing in a coil.

The electromechanical actuator may comprise a permanent magnet relay.

Alternatively the electromechanical actuator may comprise a solenoid having a coil connected across the AC supply in series with the solid state switch, the solenoid having a plunger which is moved by the electromagnetic force produced by the coil when the switch is turned on and supply current flows through the coil, the movement of the plunger opening of the contacts.

In one embodiment the device is a residual current device, the primary winding of the current transformer comprising a plurality of AC supply conductors and a current being induced in the secondary winding in response to a residual fault current in the supply conductors.

In such embodiment the current transformer has a sufficiently flat power output over the frequency range 10Hz to 1000Hz as to operate the actuator at a residual current of 30mA and above at 10Hz and a residual current of 420mA and above at 1000Hz.

In a second embodiment the device is an arc fault detector, a current being induced in the secondary winding in response to an arc fault current in the primary conductor. Embodiments of the invention will now be described, by way of example, with reference to the accompanying drawings, in which:

Figures 1 to 3b, previously described, illustrate the state of the art for RCDs.

Figure 4 is a circuit diagram of a first embodiment of the invention in the form of an RCD.

Figures 5 and 6 are graphs illustrating characteristics of the circuit of Figure 4.

Figures 7 and 8 relate to example implementations of an AFD.

Figures 9 and 10 relate to respectively an embodiment of the invention and an example implementation, each in the form of an AFD.

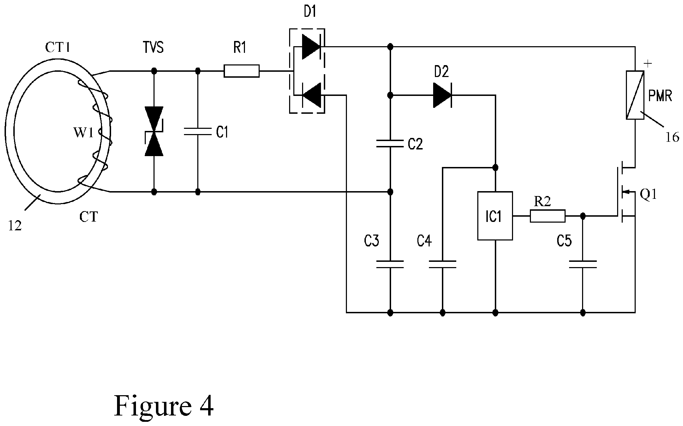

Figure 4 is an RCD embodiment of the invention based on a modification of Figure 2, and the same references have been used for the same or equivalent components. The mains supply conductors 10, the switch contacts S1 coupled to the PMR 16 and the load LD are not shown in Figure 4, but are present as shown in Figure 2.

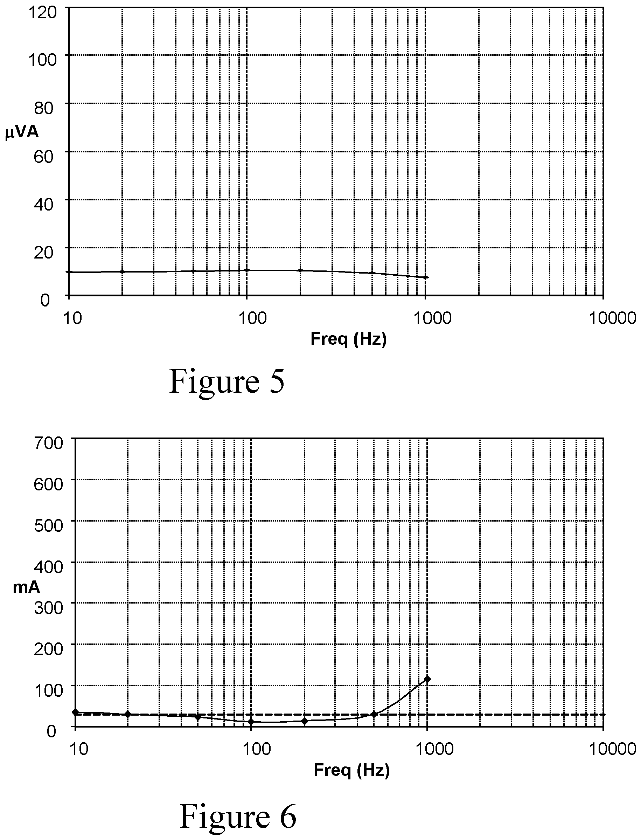

As previously stated, the Q value is largely determined by the ratio of the inductance and capacitance within the tuned circuit. This therefore provides a way to produce a flatter response over a given frequency range for a given resonant frequency, albeit with a lower energy transfer level. To achieve a substantially flat response over the range 10Hz to 1000Hz, the inductance value of CT1 and the value of C1 were changed to produce such a response over this frequency range, as represented by Figure 5. From Figure 5 it can be seen that the power output in $\mu$VA (micro volts amps) from the current transformer CT1 for a constant 30mA residual current is relatively constant over most of the range 10Hz to 1000Hz, with a fall off in transfer at the higher end of the range. However, the power output is now too low to operate the PMR 16 at any point over the range. This problem could possibly be overcome by using a higher energy CT which would add considerably to size and cost, or to use a more sensitive PMR which would also result in increased cost and a higher risk of nuisance tripping. However, these problems can be overcome by acquiring and storing the energy produced by CT1 over a period of time and using it more efficiently. Such an arrangement is shown in Figure 4.

In the arrangement of Figure 4, the current transformer CT1 and the capacitor C1 form a tuned LC circuit with a resonant frequency $Fo = 1/(2\pi\sqrt{VLC})$ which is chosen to lie within the range of 10Hz to 1000Hz. However, the values of L and C are chosen to provide a substantially flat response over this range, as shown in Figure 5. The PMR 16 is isolated from CT1 by an electrical circuit which has a very high impedance compared to the PMR 16 with the result that the loading on the CT is very small. With minimal loading CT1 produces a voltage which is fed to the high impedance electrical circuit which in effect causes CT1 to behave like a voltage transformer rather than a current transformer. Oppositely directed diodes D1 and series connected capacitors C2 and C3 form a voltage multiplier circuit such that the CT output voltage is effectively magnified. Each half cycle of mains supply residual current contributes to a voltage which is stored by capacitors C2 and C3 with the stored voltage increasing progressively with subsequent half cycles of residual current. The positive-going components of the residual current (i.e. the positive half cycles) charge up C2 via the top one of the oppositely directed diodes D1, while the negative-going components (the negative half cycles) charge up C3 via the bottom one of the diodes D1. The integrated circuit IC1 is an industry standard voltage level detector similar to those used for monitoring a battery voltage. The voltage across C2 and C3 is used to progressively charge up capacitor C4 via diode D2 and this voltage is in turn applied to IC1. When the voltage on C4 exceeds the activation threshold of IC1, the output of the latter goes high and turns on electronic switch Q1. This in turn causes the voltage stored in C2 and C3 to be applied suddenly across the PMR 16 and the resultant rapid discharge of the series-connected capacitors C2 and C3 through the PMR 16 causes the PMR 16 to operate and automatically open the contacts S1 as before. Capacitor C4 sustains IC1 with a supply voltage whilst the voltage across C2/C3 is discharged via the PMR 16. The coil of the PMR 16 is optimised so as to ensure operation of the PMR when the voltage stored across C2 and C3 is applied to it. The values of C2 and C3 are chosen so as to ensure that the cumulative charge on C2 and C3 will not exceed the triggering threshold of IC1 in response to a residual current of 10 times the rated residual operating current of the RCD flowing in the primary circuit for a duration of up to one half cycle of the mains supply, thus ensuring compliance with the requirements of subclause 9.1.6 of IEC62423. In addition, a transient voltage suppressor TVS clamps the CT1 output voltage and thereby prevents unwanted turn on of IC1 and resultant nuisance tripping in response to the 3000A surge current test of subclause 9.1.5 of IEC62423.

The arrangement of Figure 4 provides a voltage independent RCD produced from readily available components which can operate effectively over the frequency range 10Hz to 1000Hz and provide a very high level of immunity to surge currents without impacting adversely on cost or technical performance and thereby providing significant benefits over hybrid forms of RCDs used for such applications. The present embodiment was developed specifically to provide a voltage independent means for an RCD to operate within the safe touch current limits specified by IEC over the frequency range 10Hz to 1000Hz, but the principles and techniques outlined herein can be used to extend the frequency range of the RCD without deviating materially from the principles of this invention.

It can be seen that the response of the RCD is relatively flat over the range 10Hz to 1000Hz. This translates into residual current tripping levels as shown in Figure 6. In

Figure 6 the trip level is at or below 30mA at frequencies up to about 400Hz, and it rises to a peak value of about 120mA at 1000Hz, which is substantially lower than the maximum trip level of 420mA at 1000Hz as specified in IEC62423. Operation at frequencies below 10Hz could also be achieved, but at slightly higher levels than 30mA.

Thus has been described an RCD operating exclusively by voltage independent means which can provide shock protection within the limits prescribed by IEC over the range of 10Hz to 1000Hz and immunity to nuisance tripping against surge currents as specified in IEC62423.

The RCD of Figure 4 could readily be adapted to operate at higher current levels, e.g. 100mA or 300mA, without deviating materially from the basic design. Furthermore, additional multiplier stages could be added to enable operation from a lower output CT, but possibly at the risk of slower operation in response to a suddenly applied residual current at or above the prescribed operating thresholds.

The RCD of Figure 4 could be upgraded to full B Type operation as described herein by adding means to detect pure DC only. An example of such means is described in Irish patent application number S2010/0254. The key point is that the additional circuitry needs only to detect pure DC, and all other functions of the Type B RCD can be carried out by voltage independent means as described herein.

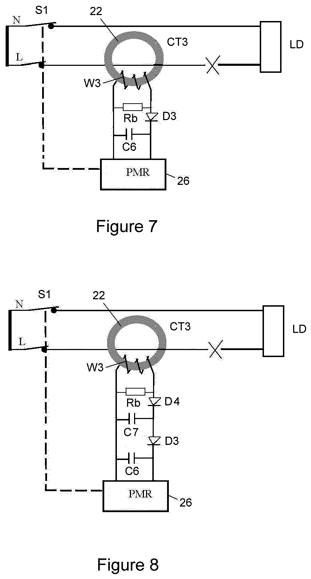

Fig. 7 relates to an example implementation of an AFD.

The circuit of Figure 7 comprises a mains supply having live and neutral conductors L, N respectively, a load LD, and a current transformer CT3 with a core 22 which may comprise air, soft iron or some other ferromagnetic material. As before there is a secondary winding W3 on the core 22, but in this example only the live conductor L passes through the CT core 22 as the primary winding. The output of the winding W3 is connected to a permanent magnet relay (PMR) 26 via a diode D3.

The characteristics of CT3 are such that at normal mains frequency the CT3 produces negligible output even though a differential current equal to the full load current is flowing through the core 22. However, as described in Irish patent application S2010/0534, CT3 is specifically designed to be highly responsive to arc fault currents - indicated by a "X" in Figure 7 - so that a broadband AC current of randomly varying amplitude will be induced in the secondary winding W3 in response to an arc fault in the primary. A corresponding AC voltage is developed across a resistor Rb. This voltage is applied to a capacitor C6 via the diode D3 so that C6 is progressively charged by the positive-going components of the current induced in the secondary winding by the arc fault current in the supply conductor L. When the magnitude and duration of the arc fault current exceeds certain thresholds, the voltage across C6 will be sufficient to activate the PMR 26 and cause automatic opening of the supply contacts S1. Rb can be used to set an arc fault current operating threshold for the device.

In Figure 7 the PMR 26 acts as a continuous load on capacitor C6, draining it of charge.

In the example of Figure 8, a further diode D4 and capacitor C7 have been added. Initially C7 acquires a charge via D4 without any drain by the PMR, and once its charge exceeds the conducting voltage of the diode D3, C6 starts to be progressively charged by the positive-going components of the current induced in the secondary winding by the arc fault current in the supply conductor L. When the voltage across C6 reaches a certain threshold it will be sufficient to activate the PMR 26 and cause automatic opening of the supply contacts S1. Thus the PMR 26 can be provided with current flow from C6 and C7 to ensure more reliable or consistent operation. The effect of D4/C7 is to delay the onset of charging the capacitor C6; otherwise the circuit works essentially the same as Figure 7.

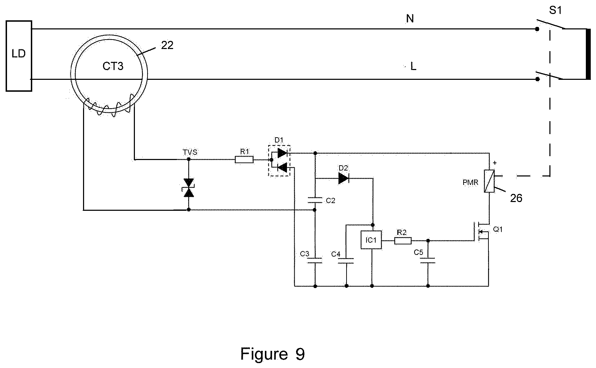

Figure 9 shows a further embodiment of AFD circuit according to the invention. In this embodiment the current transformer CT3 is connected to the PMR 26 by a high impedance electrical circuit which is substantially the same as that shown in Figure 4, except for the omission of the capacitor C1 which is not necessary in this AFD embodiment. The high impedance circuit of Figure 9 operates in just the same way as that in Figure 4. Thus, the positive and negative going signal components produced by CT3 in response to an arc fault current contribute to a progressively increasing charge which is stored by capacitors C2 and C3. The voltage across C2 and C3 is used to charge up capacitor C4 via diode D2 and the voltage on C4 is in turn applied to IC1. When the voltage on C4 exceeds the activation threshold of IC1, the output of the latter goes high and turns on electronic switch Q1. This in turn causes the voltage stored in C2 and C3 to be applied suddenly across the PMR 26 and the resultant rapid discharge of the series-connected capacitors C2 and C3 through the PMR 26 causes the PMR to operate and automatically open the contacts S1 as before. Capacitor C4 sustains IC1 with a supply voltage whilst the voltage across C2/C3 is discharged via the PMR. The coil of the PMR is optimised so as to ensure operation of the PMR when the voltage stored across C2 and C3 is applied to it.

The embodiment of Figure 9 provides higher immunity against nuisance tripping that may be caused by voltage or current spikes or transients in the primary circuit. Transient voltage suppressor TVS suppresses voltage pulses above a certain threshold. Component values are chosen so as to optimise the response time of the circuit to arc fault currents.

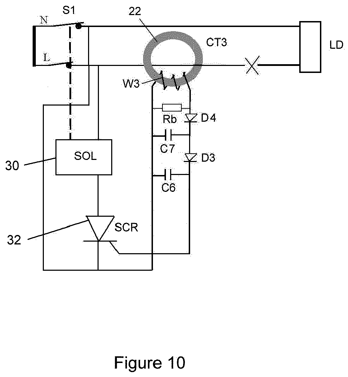

Figure 10 shows another examples in the form of an AFD which uses a simple solenoid rather than a permanent magnet relay to open the contacts S1. Figure 10 is a modification of the circuit of Figure 8, and the same references have been used for components which perform equivalent functions.

The solenoid (SOL) 30 comprises a ferromagnetic element (plunger) positioned within a coil and when a current of sufficient magnitude flows through the coil the plunger is moved from a first position to a second position with sufficient force to cause automatic opening of the contacts S1 to which it is coupled. The force required to open the contacts is produced solely by the current flowing through the solenoid coil. In Figure 10 the solenoid coil is placed in series with an SCR 32 across the L, N mains conductors. The SCR 32 is normally off, so no current flows through the solenoid coil. The components W3, D3, D4, C6 and C7 operate as previously described, and when the voltage across C6 reaches a certain threshold it will be sufficient to turn on the SCR 32. This connects the solenoid coil directly across the mains conductors and the resultant current flow through the coil operates the plunger to open the contacts S1.

The examples and embodiments of Figures 7 to 10 can be further refined by, for example, providing additional components to provide immunity to voltage or current surges induced into W3 from the primary circuit. The embodiments can be used for protection against series or parallel arcing. All of the mains conductors may be passed through the CT core 22 without undermining the ability of the circuits to detect arc fault currents.

The AFD represented by the examples and embodiments of figure 7 to 10 may also be used on DC supply systems, as described in Irish patent application number S2010/0534.

It follows that the RCD and the AFD embodiments could be used as stand alone circuits within a single product, e.g. an RCD/AFD combination unit, or they could be combined so as to minimise the component count by for example using a common PMR or some common circuitry, etc

The invention is not limited to the embodiments described herein which may be modified or varied without departing from the scope of the invention.

**Claims**

1. A fault detecting device for an AC supply, the device including a current transformer (CT1) having a primary winding comprising at least one supply conductor (10; L,N) connecting an AC supply to a load (LD), a secondary winding (W1) into which a current is induced in response to a fault current in the primary winding, and an electrical circuit connecting the secondary winding to an electromechanical actuator (16; 26) having mechanical contacts in the AC supply, **characterised in that** the electrical circuit includes two capacitors (C2, C3) connected in series, which are progressively charged alternately by consecutive positive- and negative-going components of the current of at least one polarity induced in the secondary winding, the charge on the two capacitors being summed, and a solid state switch (Q1;) which is turned on when the voltage on the two capacitors reaches a predetermined level, and wherein turning on the switch causes the two capacitors (C2, C3) to discharge through the coil of the electromechanical actuator to open the mechanical contacts (S1) and disconnect the load, whereby the energy to open the mechanical contacts is derived exclusively from the current induced into the secondary winding.

2. The fault detecting device claimed in claim 1, wherein the electromechanical actuator comprises a permanent magnet relay.

3. The fault detecting device claimed in claim 1, wherein the electromechanical actuator comprises a solenoid (30) having a coil connected across the AC supply in series with the solid state switch (32), the solenoid having a plunger which is moved by the electromagnetic force produced by the coil when the switch is turned on and supply current flows through the coil, the movement of the plunger opening of the contacts.

4. The fault detecting device claimed in claim 1, wherein the device is a residual current device, the primary winding of the current transformer comprising a plurality of AC supply conductors (10) and a current being induced in the secondary winding in response to a residual fault current in the supply conductors.

5. The fault detecting device claimed in claim 4, wherein the current transformer has a sufficiently flat power output over the frequency range 10Hz to 1000Hz as to operate the actuator at a residual current of 30mA and above at 10Hz and a residual current of 420mA and above at 1000Hz.

6. The fault detecting device claimed in claim 1, wherein the device is an arc fault detector having a single supply conductor (L) as a primary for the current transformer, a broadband AC current of randomly varying amplitude being induced in the secondary winding in response to an arc fault current in the primary conductor, and wherein the current transformer is substantially more responsive to said broadband AC currents than currents at the supply frequency.

## Patentansprüche

1. Fehlererkennungsvorrichtung für eine Wechselstromversorgung, wobei die Vorrichtung einen Stromwandler (CT1) einschließt, der eine primäre Wicklung, die mindestens einen eine Wechselstromversorgung mit einem Verbraucher (LD) verbindenden Versorgungsleiter (10; L,N), eine sekundäre Wicklung (W1), in die ein Strom als Reaktion auf einen Fehlerstrom in der primären Wicklung induziert wird, und eine elektrische Schaltung aufweist, die die sekundäre Wicklung mit einem elektromechanischen Aktuator (16; 26) verbindet, der mechanische Kontakte in der Wechselstromversorgung aufweist, **dadurch gekennzeichnet, dass** die elektrische Schaltung zwei in Reihe geschaltete Kondensatoren (C2, C3), die fortschreitend abwechselnd durch aufeinanderfolgende positiv und negativ gehende Komponenten des in die sekundäre Wicklung induzierten Stroms mindestens einer Polarität aufgeladen wird, wobei die Ladung auf den zwei Kondensatoren summiert ist, und einen Festkörperschalter (Q1;) einschließt, der eingeschaltet wird, wenn die Spannung auf den zwei Kondensatoren einen vorbestimmten Wert erreicht, und wobei das Einschalten des Schalters die zwei Kondensatoren (C2, C3) veranlasst, sich durch die Spule des elektromechanischen Aktuators zu entladen, um die mechanischen Kontakte (S1) zu öffnen und den Verbraucher zu lösen, wodurch die Energie zum Öffnen der mechanischen Kontakte ausschließlich vom in die sekundäre Wicklung induzierten Strom abgeleitet ist.

2. Fehlererkennungsvorrichtung nach Anspruch 1, wobei der elektromechanische Aktuator ein Dauermagnetrelais umfasst.

3. Fehlererkennungsvorrichtung nach Anspruch 1, wobei der elektromechanische Aktuator eine Magnetspule (30) mit einer Spule umfasst, die über die Wechselstromversorgung in Reihe mit dem Festkörperschalter (32) verbunden ist, wobei die Magnetspule einen Kolben aufweist, der durch die durch die Spule erzeugte elektromagnetische Kraft bewegt wird, wenn der Schalter eingeschaltet wird und Versorgungsstrom durch die Spule fließt, wobei die Bewegung des Kolbens die Kontakte öffnet.

4. Fehlererkennungsvorrichtung nach Anspruch 1, wobei die Vorrichtung eine Reststromvorrichtung ist, wobei die primäre Wicklung des Stromwandlers eine Vielzahl von Wechselstromversorgungsleiter (10) umfasst, und wobei ein Strom in die sekundäre Wicklung als Reaktion auf einen Restfehlerstrom in den Versorgungsleitern induziert wird.

5. Fehlererkennungsvorrichtung nach Anspruch 4, wobei der Stromwandler eine ausreichend flache Leistungsausgabe über dem Frequenzbereich 10 Hz bis 1000 Hz aufweist, um den Aktuator bei einem Reststrom von 30 mA und darüber bei 10 Hz und bei einem Reststrom von 420 mA und darüber bei 1000 Hz zu betreiben.

6. Fehlererkennungsvorrichtung nach Anspruch 1, wobei die Vorrichtung ein Lichtbogenfehlerdetektor ist, der eine einzelne Versorgungsleitung (L) als eine primäre Wicklung für den Stromwandler aufweist, wobei ein Breitbandwechselstrom mit zufällig variierender Amplitude in die sekundäre Wicklung als Reaktion auf einen Lichtbogenfehlerstrom in der primären Leitung induziert wird, und wobei der Stromwandler im Wesentlichen mehr auf die Breitbandwechselströme als auf Ströme bei der Versorgungsfrequenz anspricht.

## Revendications

1. Dispositif de détection de défaut pour une alimentation en courant alternatif (CA), le dispositif comportant un transformateur de courant (CT1) ayant un enroulement primaire comprenant au moins un conducteur d'alimentation (10 ; L, N) connectant une alimentation en CA à une charge (LD), un enroulement secondaire (W1) dans lequel un courant est induit en réponse à un courant de défaut dans l'enroulement primaire, et un circuit électrique connectant l'enroulement secondaire à un actionneur électromécanique (16 ; 26) ayant des contacts mécaniques dans l'alimentation en CA, **caractérisé en ce que** le circuit électrique comporte deux condensateurs (C2, C3) connectés en série, qui sont progressivement chargés en alternance par des composants de sens positif et négatif consécutifs du courant d'au moins une polarité induite dans l'enroulement secondaire, la charge sur les deux condensateurs étant additionnée, et un commutateur à semi-conducteurs (Q1) qui est allumé lorsque la tension sur les deux condensateurs atteint un niveau prédéterminé, et dans lequel le fait d'allumer le commutateur amène les deux condensateurs (C2, C3) à se décharger à travers la bobine de l'actionneur électromécanique afin d'ouvrir les contacts mécaniques (S1) et de déconnecter la charge, moyennant quoi l'énergie pour ouvrir les contacts mécaniques est tirée exclusivement du courant induit dans l'enroulement secondaire.

2. Dispositif de détection de défaut selon la revendica-

**EP 2 445 074 B1**

tion 1, dans lequel l'actionneur électromécanique comprend un relais d'aimant permanent.

3. Dispositif de détection de défaut selon la revendication 1, dans lequel l'actionneur électromécanique comprend un solénoïde (30) ayant une bobine connectée aux bornes de l'alimentation en CA en série avec le commutateur à semi-conducteurs (32), le solénoïde ayant un plongeur qui est déplacé par la force électromagnétique produite par la bobine lorsque le commutateur est allumé et qu'un courant d'alimentation circule dans la bobine, le déplacement du plongeur ouvrant les contacts.

4. Dispositif de détection de défaut selon la revendication 1, dans lequel le dispositif est un dispositif de courant résiduel, l'enroulement primaire du transformateur de courant comprenant une pluralité de conducteurs d'alimentation en CA (10) et un courant étant induit dans l'enroulement secondaire en réponse à un courant de défaut résiduel dans les conducteurs d'alimentation.

5. Dispositif de détection de défaut selon la revendication 4, dans lequel le transformateur de courant a une sortie de puissance suffisamment plate sur la plage de fréquences de 10 Hz à 1 000 Hz, de façon à actionner l'actionneur à un courant résiduel de 30 mA et plus à 10 Hz et un courant résiduel de 420 mA et plus à 1 000 Hz.

6. Dispositif de détection de défaut selon la revendication 1, dans lequel le dispositif est un détecteur de défaut d'arc ayant un conducteur d'alimentation (L) unique en tant que primaire pour le transformateur de courant, un courant CA à large bande d'une amplitude variant au hasard étant induit dans l'enroulement secondaire en réponse à un courant de défaut d'arc dans le conducteur primaire, et dans lequel le transformateur de courant est sensiblement plus réactif auxdits courants CA à large bande qu'à des courants à la fréquence d'alimentation.

Figure 1

Figure 2

Figure 3a

Figure 3b

Figure 4

Figure 5

Figure 6

Figure 7

Figure 8

Figure 9

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO S20100534 A
- US 6198611 B
- AT 403534
- DE 3807934
- EP 0575639 A
- WO S20100254 A